(19) Europäisches Patentamt
European Patent Office
Office européen des brevets

(11) EP 0 565 805 B1

(12) **EUROPEAN PATENT SPECIFICATION**

(45) Date of publication and mention
of the grant of the patent:
**20.11.1996 Bulletin 1996/47**

(51) Int Cl.⁶: **F03B 11/00**

(21) Application number: **92830181.1**

(22) Date of filing: **14.04.1992**

(54) **Control of the pulses of hydraulic pressure and power in a hydraulic turbine**

Steuerung von Druck- und Leistungsschwankungen in Wasserturbinen

Commande des fluctuations de pression et de puissance dans des turbines hydrauliques

(84) Designated Contracting States:
**AT CH DE ES FR GB IT LI SE**

(43) Date of publication of application:
**20.10.1993 Bulletin 1993/42**

(73) Proprietor: **ENTE NAZIONALE PER L'ENERGIA ELETTRICA - (ENEL)**
**I-00198 Roma (IT)**

(72) Inventor: **Fanelli Michele**
**I-20162 Milano (IT)**

(74) Representative: **Ferraiolo, Ruggero**
**FERRAIOLO S.r.l.,**
**Via Napo Torriani, 10**
**20124 Milano (IT)**

(56) References cited:
**GB-A- 1 060 395**          **US-A- 4 991 397**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention concerns a system for the active control of pulses of the hydraulic pressure and power in a reaction hydraulic turbine, in particular in a Francis type hydraulic turbine when the latter functions under loads different from the nominal load.

For simplicity of demonstration, in the following of this description we refer solely to the Francis turbine.

It is noted that in a Francis turbine under loads greater than or less than the nominal load a circular motion of the water flow at the exit of the blades of the rotor is generated giving rise in the turbine diffusor to the well noted phenomenon called "vortex rope" responsible for pulses of the hydraulic pressure and power of the turbine. These pulses can be amplified by the dynamic characteristics of the turbine and of the hydraulic plant in general and compromise the correct functioning of the turbine in certain ranges of load.

According to the technique noted said drawback is obviated empirically by various means, defined as means of passive control, such as for example introducing a certain flow of air downstream of the rotor or placing bodies of various shape in the diffusor, that are suited to breaking said circular motion

The disadvantages of the noted technique are its limited effectiveness, the empirical nature of the employment criteria, a loss of output, mechanical complications and the high cost of installing compressors and/or valves for the regulation of the air flow downstream of the rotor, and the rapid_wear of said bodies of various shapes due to cavitation or due to stress caused by vibration.

Additionally, documents GB 1,060,395 and US 4,991,397 are quoted as referring to inventions having some apparent connections with this present one.

GB 1,060,395 discloses a method providing introduction of compressed air into the water line in order to reduce water hammer which is a scope different from the one of this present invention that is to make the diffusor volume vary in order to minimize the "vortex rope". Moreover, the means used by the method is the introduction of compressed air whilst the introduction of additional water in the turbine diffusor elbow and a body displacing into the turbine diffusor are provided in the present invention.

US 4,991,397 has common with this present invention a water duct entering the water turbine diffusor; the water duct defines a water jet member which produces a fluid jet at a defined hydrostatic head in order to provide enersy input, such water being other than that received at the turbine volute whilst the additional water concerned with this present invention is the same received at the turbine volute.

In the following of this description the volume which is available to the water in the transfer from the exit of the rotor to the piezometric basin is termed the "volume of the diffusor".

The invention obviates the greater part of the above-mentioned disadvantages and, as claimed, is a system comprising, together or alternatively, at least a body of fixed volume controlled to move in the elbow of the diffusor and an auxiliary duct having a controlled flow of water and, preferably of constant section, extended parallel to the diffusor, from the region of the elbow to that adjacent the piezometric basin, both used as a means for introducing an additional controlled flow of water at the diffusor elbow or a little more downstream of the elbow.

The moveable body is moved by a suitable motor means so as to move between a position in which the volume of the diffusor is maximum (moveable body is completely retracted) and a position in which the volume of the diffusor is minimum (moveable body is completely extended). The motor means is controlled by a system comprising pressure sensors installed in the diffusor immediately downstream of the rotor to identify the synchronous component of the pressure oscillations by means of suitable on-line processing by a signal processor of the signals from said sensors and by a programmer which uses the processed signals according to a pre-set program and an actuator which drives said motor. Preferably, said pre-set program gives said motor a markedly sinusoidal reciprocating motion of amplitude, phase and frequency able to minimise said "vortex rope" phenomenon.

In the auxiliary duct, as explained herein, an oscillating flow of water is generated which travels from the piezometric basin toward a controlled valve in order to enter the diffusor elbow and join the water flow of state $Q_o$.

Experimental evidence has shown that making said volume of the diffusor vary by means of the said moveable body and/or by means of said auxiliary duct, as a function of the hydraulic pressure pulses measurable in the diffusor, reduces these pulses to a minimum and hence the negative effects to the power of the turbine. Said moveable body is preferably positioned in the external bend of the diffusor elbow or in a position immediately downstream of said external bend, and said parallel duct having constant section with inlet opening in the external part is preferably immediately downstream of the elbow and the outlet opening close to the piezometric basin. The inlet aperture is controlled by a valve which, in turn, can be controlled in various ways, for example by opening when the piezometric pressure increases and closing when the piezometric pressure decreases, as better explained later in this description.

The following provides a brief theoretical explanation of the invention.

It is noted that the synchronous excitation caused by the interaction between the diffusor elbow and the angular position of the thread of vorticose and rotating water can be represented as a periodic pulse (amplitude $/\tilde{\text{H}}/$ and period $2\pi/\omega$ of the piezometric gap between the beginning and the end of the elbow; therefore it is not possible without using appropriate devices, to obtain a stable piezometric line with constant rate of flow in the section of the diffusor which follows the elbow. The dynamic equilibrium of the system can be obtained by means of periodic variations of the flow which, however, give rise to variations of the volume of the cavity about the vortex rope and, therefore, variations of the synchronous pressure and, again, to variations of gap, rate of flow, torque and power of the turbine rotor.

According to the invention, some of such unwanted variations are avoided by means of the reciprocating movement of the moveable body which is the same as injecting into the diffusor, from outside, an oscillating water flow

$$\tilde{q} = - \tilde{H} / Z_d$$

in which $Z_d$ is the inlet impedance of the diffusor (for simplicity of demonstration we keep to a linear approximation of the system). Now, the presence of the synchronous excitation H, between the first section, that immediately downstream of the rotor, and the second section, that at the end of the elbow, is exactly the necessary and sufficient condition to ensure a piezometric constant at the beginning of the elbow and variations at the end of the elbow that are consistent with the presence of the additional flow of water **q** and, therefore, to dynamically isolate all the system upstream of said first section from events which are downstream. In this way, the vortex rope or the greater part of it, does not suffer from the pressure variations, the cavitated volume remains constant, there are no synchronous pressure variations upstream of said first section and the rate of flow, the gap, the torque, and the power remain constant.

According to the invention, further unwanted variations can also be avoided by means of said auxiliary duct. The inlet opening of said auxiliary duct is controlled by a valve the opening and closing of which are modulated by periodic variations $\tilde{\xi}$ of the coefficient of load loss of the same valve chosen at about an average value $\bar{\xi}$. With the turbine functioning, the variations of kinetic energy in the diffusor cause the piezometric **h₃** (constant) corresponding to the piezometric basin inlet to be greater than the piezometric average **h₂** corresponding to the valve which gives rise in the parallel duct to an average flow **q₀** from said basin to said inlet opening. The variations of $\tilde{h}_2$, together with the modulations of the valve aperture expressed by $\tilde{\xi}$, give rise to oscillations of the rate of flow $\tilde{q}$ about said average rate of flow **q₀** and in this way a flow **Q₀** + **q₀** + $\tilde{q}$ is established in the diverging section of the diffusor (see also fig. 3).

A way of implementing the invention is explained in detail as follows with reference to the attached drawings in which

FIG 1 is a first partially sectioned vertical view,

FIG 2 is a section according to I-I of Fig 1 and FIG 3 is a second partially sectioned vertical view.

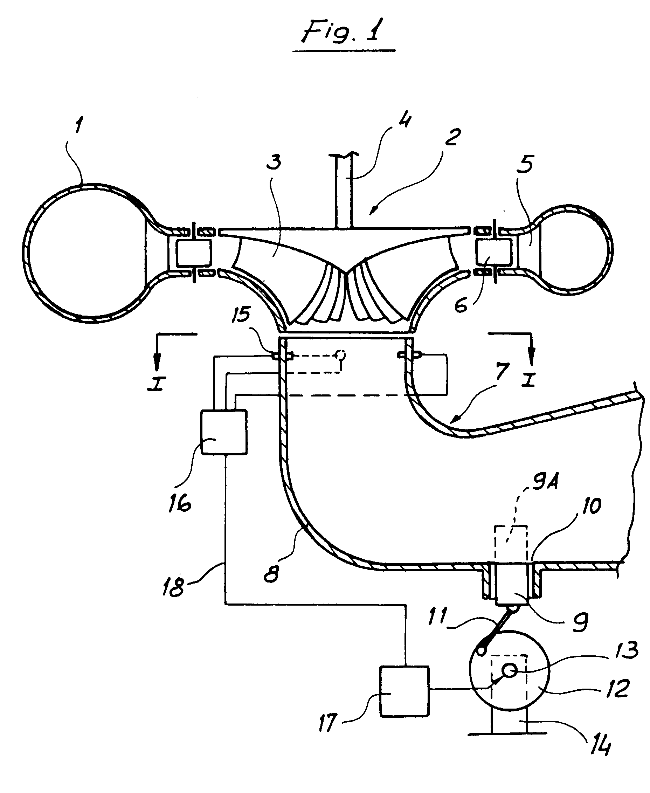

Fig. 1 shows part of a Francis turbine with its volute 1, the rotor 2, comprising blades 3 and the shaft 4, the fixed blade pre distributor 5, the movable blade distributor 6 and the diffusor 7 with elbow 8. In the lower part of the distributor, immediately downstream of the elbow there is a sliding cylindrical body 9 in a corresponding cylindrical seat 10; an arm 11, one end of which is jointed to the lower end of the cylindrical body, the other end of which is jointed to an element which rotates with the shaft 13 of a motor 14 capable of giving to the body 9 a markedly sinusoidal reciprocating movement and of amplitude, frequency and phase controlled by the signals transmitted from the pressure transducers 15 that are able to measure the pressure variations produced by the vortex rope phenomenon; the signals transmitted from the transducers 15 are processed by a processor-regulator 16 which controls an actuator 17 which in turn drives the motor 14. In this way, the cylindrical body is controlled to extend into and retract from the diffusor between the position indicated in the drawing as 9 in which the volume of the diffusor is maximum and the position indicated in the drawing as 9A in which the volume of the diffusor is minimum. All the connections between the parts are indicated in short as 18.

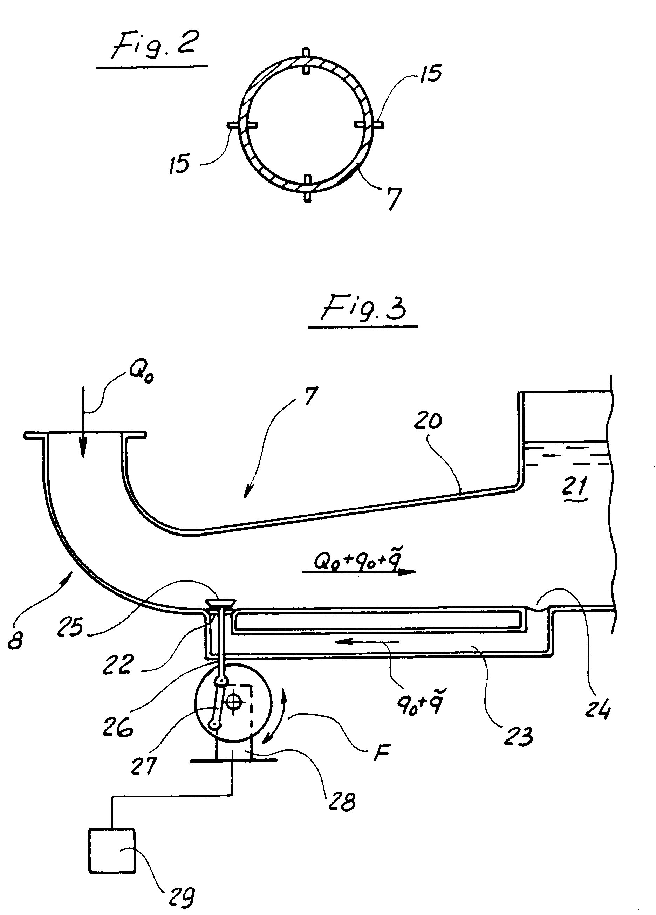

Fig 2 shows that there are four pressure transducers 15 placed at the inlet of the diffusor, each at a 90° angle.

Fig. 3 shows that a flow of water **Q₀** enters the diffusor 7, travels along the elbow 8 and the section diverging 20 to the piezometric basin 21; immediately downstream of the elbow 8 there is an inlet opening 22 for a duct 23 of constant section and markedly parallel to the diffusor; an outlet opening 24 connects said duct with the piezometric basin; the inlet opening 22 is controlled by the opening and closing of a valve 25 the stem 26 of which is fitted onto an element 27 which can rotate, in the sense of arrow F, and is moved by a motor 28 controlled by a processor-regulator 16 ( indicated only in Fig.1) and an actuator 29. The figure shows water flow **q₀** + $\tilde{q}$ given rise to in the duct 23 in the direction of the aperture 22 and flow **Q₀** + **q₀** + $\tilde{q}$ given rise to in the diffusor 7 in the section between the inlet and the outlet of said duct 23, as has been explained in this description.

**Claims**

1. A system for controlling the pulses of hydraulic pressure and power in a reaction hydraulic turbine **characterized** in that it comprises at least a moveable body (9) inside the diffusor (7) between a first, retracted position (9) and a second extended position (9A) as a means for introducing an additional, controlled pulsating flow of water at the diffusor elbow in the turbine, said moveable body (9) being controlled in such a way as to make the volume of the diffusor (7) vary to reduce the pulses of pressure in the diffusor to a minimum and to maintain constant the flow, the gap, the torque and the power of the turbine rotor (3).

2. A system for controlling the pulses of hydraulic pressure and power in a reaction hydraulic turbine **characterized** in that it comprises at least an auxiliary duct (23) as a means for introducing an additional, controlled pulsating flow of water at the diffusor elbow in the turbine, said additional duct (23) being markedly parallel to the diffusor (7) and connected to said diffusor (7) with its own inlet and outlet apertures (22, 24), the inlet aperture (22) being positioned at the end of the diffusor elbow (8) controlled by a valve (25) and the outlet aperture (24) being positioned adjacent to the piezometric basin (21) and said valve (25) being controlled in such a way as to make the volume of the diffusor (7) vary to reduce the pulses of pressure in the diffusor to a minimum and to maintain constant the flow, the gap, the torque and the power of the turbine rotor (3).

3. A system according to claims 1 and 2 characterized in that it comprises at least one of said moveable body and at least one of said auxiliary duct (23).

4. A system according to claim 1 characterized in that said moveable body is moved by a motor means (14) controlled by a unit comprising pressure sensors (15) located at the inlet to the diffusor (7) to detect the hydraulic pressure, a processor-regulator (16) provided to process the signals transmitted by the said sensors (15) and to utilise the said signals according to a pre-set program to drive an actuator (17) which controls said motor means (14).

5. A system according to claims 1 and 4 characterized in that the said pre-set program gives to said moveable body (9) a markedly sinusoidal reciprocating motion and of amplitude, frequency and phase able to minimise the pulses of hydraulic pressure and power in the turbine.

6. A system according to claims 1, 4, 5 characterized in that said moveable body (9) is found in the region of the diffusor (7) elbow (8).

7. A system according to the claims 1, 4, 5 characterized in that said moveable body (9) is found in the external bend of the elbow (8).

8. A system according to claim 2 characterized in that said auxiliary duct (23) is of constant section.

9. A system according to claims 2, 7 characterized in that the opening and closing of said valve (25) are controlled in such a way as to produce periodic variations in the average value of the coefficient of the same valve's load loss in order that the average rate of flow of the water ($q_o$), directed towards said valve inside said auxiliary duct (23) caused by the pressure differential between the outlet opening (24) of said duct (23) in the piezometric basin (21) and the inlet opening (22) of the same duct at the end of the diffusor(7) elbow (8), a pulsing flow of water (q) is added, the sum of the two flows ($q_o + \breve{q}$) discharges into the diffusor(7) elbow (8).

**Patentansprüche**

1. System zum Steuern der hydraulischen Druck- und Leistungsimpulse in einer hydraulischen Reaktionsturbine,
dadurch **gekennzeichnet**, daß es mindestens einen beweglichen Körper (9) innerhalb des Diffusors (7) aufweist, der zwischen einer ersten, zurückgezogenen Position (9) und einer zweiten, ausgefahrenen Position (9a) bewegbar ist, als Mittel zum Einführen einer zusätzlichen, gesteuert pulsierenden Wasserströmung am Diffusorkrümmer in der Turbine, wobei der bewegliche Körper (9) derart gesteuert ist, daß er das Volumen des Diffusors (7) verändert, um die Druckimpulse in dem Diffusor auf ein Minimum zu reduzieren und die Strömung, den Spalt, das Drehmoment und die Leistung des Turbinenrotors (3) konstant zu halten.

2. System zum Steuern der hydraulischen Druck- und Leistungsimpulse in einer hydraulischen Rückstoßturbine,
dadurch **gekennzeichnet**, daß es mindestens einen Hilfskanal (23) aufweist als Mittel zum Einführen einer zusätzlichen, gesteuert pulsierenden Wasserströmung am Diffusorkrümmer in der Turbine, wobei der Hilfskanal (23) im wesentlichen parallel zu dem Diffusor (7) verläuft und mit eigenen Einlaß- und Auslaßöffnungen (22, 24) mit dem Diffusor (7) verbunden ist, wobei die am Ende des Diffusorkrümmers (8) angeordnete Einlaßöffnung (22) durch ein Ventil (25) gesteuert ist und die Auslaßöffnung (24) nahe dem statischen Druckbecken (21) angeordnet ist und das Ventil (25) derart gesteuert ist, daß das Volumen des Diffusors (7) verändert wird, um die Druckimpulse in dem Diffusor auf ein Minium zu reduzieren und die Strömung, den Spalt, das Drehmoment und die Leistung des Turbinenrotors (3) konstant zu halten.

3. System nach Anspruch 1 und 2,
dadurch **gekennzeichnet**, daß es mindestens einen beweglichen Körper und mindestens einen Hilfskanal (23) aufweist.

**4.** System nach Anspruch 1,
dadurch **gekennzeichnet**, daß der bewegliche Körper durch eine Antriebseinrichtung (14) bewegt wird, die gesteuert ist durch eine Einheit mit am Einlaß des Diffusors (7) angeordneten Drucksensoren (15) zum Detektieren des hydraulischen Drucks, einem Prozessor-Regler (16) zum Verarbeiten der von den Sensoren (15) abgegebenen Signale und zur Verwendung dieser Signale gemäß einem vorgegebenen Programm zum Antrieb eines Betätigers (17), der die Antriebseinrichtung (14) steuert.

**5.** System nach Anspruch 1 und 4,
dadurch **gekennzeichnet**, daß das vorgegebene Programm dem beweglichen Körper (9) eine im wesentliche sinusförmige Hin- und Herbewegung gibt mit einer Amplitude, Frequenz und Phase derart, daß die Hydraulikdruck- und Leistungsimpulse in der Turbine minimiert werden.

**6.** System nach den Ansprüche 1, 4, 5,
dadurch **gekennzeichnet**, daß der bewegliche Körper (9) im Bereich des Krümmers (8) des Diffusors (7) vorgesehen ist.

**7.** System nach den Ansprüchen 1, 4, 5,
dadurch **gekennzeichnet**, daß der bewegliche Körper (9) im äußeren Bogen des Krümmers (8) vorgesehen ist.

**8.** System nach Anspruch 2,
dadurch **gekennzeichnet**, daß der Hilfskanal (23) konstanten Querschnitt hat.

**9.** System nach Anspruch 2, 7,
dadurch **gekennzeichnet**, daß das Öffnen und Schließen des Ventils (25) derart gesteuert wird, daß periodische Änderungen des Mittelwertes des Druckverlustkoeffizienten des Ventils erzeugt werden, damit zu der gegen das Ventil innerhalb des Hilfskanals (5) gerichteten mittleren Strömungsgeschwindigkeit des Wassers ($q_o$), die durch die Druckdifferenz zwischen der Auslaßöffnung (24) des Kanals (23) in dem statischen Druckbecken (21) und der Einlaßöffnung (22) des Kanals am Ende des Krümmers (8) des Diffusors (7) bewirkt wird, eine pulsierende Wasserströmung (q) hinzugefügt wird, wobei die Summe der beiden Strömungen ($q_o$ plus $\tilde{q}$) in den Krümmer (8) des Diffusors (7) austritt.

**Revendications**

**1.** Système de commande des fluctuations ou pulsations de pression et de puissance hydrauliques dans une turbine hydraulique à réaction,
caractérisé en ce qu'
il comprend au moins un corps mobile (9), à l'intérieur du diffuseur (7), entre une première position rétractée (9) et une seconde position de sortie (9A) pour servir de moyen d'introduction d'un débit d'eau fluctuant ou pulsé, commandé, supplémentaire, à l'endroit du coude du diffuseur de la turbine, ce corps mobile (9) étant commandé de manière à faire varier le volume du diffuseur (7) pour réduire au minimum les fluctuations de pression dans le diffuseur et pour maintenir constants le débit, l'intervalle, le couple et la puissance du rotor de turbine (3).

**2.** Système de commande des fluctuations de pression et de puissance hydrauliques dans une turbine hydraulique à réaction,
caractérisé en ce qu'
il comprend au moins un conduit auxiliaire (23) servant de moyen d'introduction d'un débit d'eau fluctuant commandé supplémentaire à l'endroit du coude du diffuseur de la turbine, ce conduit supplémentaire (23) étant parfaitement parallèle au diffuseur (7) et relié à ce diffuseur (7) par ses propres ouvertures d'entrée et de sortie (22, 24), l'ouverture d'entrée (22) étant placée à l'extrémité du coude de diffuseur (8) en étant commandée par une soupape (25), et l'ouverture de sortie (24) étant placée au voisinage du bassin piézométrique (21), la soupape (25) étant commandée de manière à faire varier le volume du diffuseur (7) pour réduire au minimum les fluctuations de pression dans le diffuseur et pour maintenir constants le débit, l'intervalle, le couple et la puissance du rotor de turbine (3).

**3.** Système selon les revendications 1 et 2,
caractérisé en ce qu'
il comprend au moins l'un ou l'autre du corps mobile et du conduit auxiliaire (23).

**4.** Système selon la revendication 1,
caractérisé en ce que le corps mobile est entraîné par un moteur (14) commandé par un bloc comprenant des détecteurs de pression (15) placés à l'entrée du diffuseur (7) pour détecter la pression hydraulique, un régulateur-processeur (16) destiné à traiter les signaux transmis par les détecteurs (15) et à utiliser ces signaux suivant un programme prédéterminé pour actionner un actuateur (17) qui commande le moteur (14).

**5.** Système selon les revendications 1 et 4,
caractérisé en ce que
le programme prédéterminé donne au corps mobile (9) un mouvement alternatif essentiellement sinusoïdal dont l'amplitude, la fréquence et la phase sont capables de minimiser les fluctuations de pression et de puissance hydrauliques dans la turbine.

**6.** Système selon les revendications 1 et 4, et 5,
caractérisé en ce que

le corps mobile (9) se trouve dans la zone du coude (8) du diffuseur (7).

7. Système selon les revendications 1 et 4 et 5, caractérisé en ce que le corps mobile (9) se trouve dans la partie courbée extérieure du coude (8).

8. Système selon la revendication 2, caractérisé en ce que le conduit auxiliaire (23) est de section constante.

9. Système selon les revendications 2 à 8, caractérisé en ce que l'ouverture et la fermeture de la soupape (25) sont commandées de manière à produire des variations périodiques de la valeur moyenne du coefficient de perte de charge de cette même soupape, pour que la moyenne du débit d'eau ($q_0$) dirigé vers la soupape à l'intérieur du conduit auxiliaire (23) produit par la pression différentielle entre l'ouverture de sortie (24) du conduit (23) dans le bassin piézométrique (21), et l'ouverture d'entrée (22) de ce même conduit à l'extrémité du coude (8) du diffuseur (7), un débit pulsé d'eau (q) est ajouté, la somme des deux débits ($q_0 = \tilde{q}$) se déchargeant dans le coude (8) du diffuseur (7).

Fig. 1

*Fig. 2*

*Fig. 3*